Europäisches Patentamt

European Patent Office

Office européen des brevets

(19)

(11) **EP 1 434 028 A1**

(12) **EUROPEAN PATENT APPLICATION**

(43) Date of publication:
**30.06.2004 Bulletin 2004/27**

(51) Int Cl.⁷: **G01B 11/00**, G06T 7/00

(21) Application number: **03029753.5**

(22) Date of filing: **23.12.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(30) Priority: **26.12.2002 JP 2002376913**<br><br>(71) Applicant: **Mitutoyo Corporation**<br>**Kawasaki-shi, Kanagawa 213-8533 (JP)**<br><br>(72) Inventors:<br> • **Matsumiya, Sadayuki**<br>  **Kawasaki-shi Kanagawa 213-8533 (JP)** | • **Suzuki, Masamichi**<br>  **Kawasaki-shi Kanagawa 213-8533 (JP)**<br> • **Kuwashima, Mamoru**<br>  **Kawasaki-shi Kanagawa 213-8533 (JP)**<br> • **Yasuda, Mamoru**<br>  **Kawasaki-shi Kanagawa 213-8533 (JP)**<br><br>(74) Representative: **Grünecker, Kinkeldey,**<br>**Stockmair & Schwanhäusser Anwaltssozietät**<br>**Maximilianstrasse 58**<br>**80538 München (DE)** |

(54) **Apparatus and method for generating a combined image from partial images**

(57)    An image-reading apparatus has a digital camera (2) for sequentially taking image of each part of a lateral dentition surface as overlapped partial images, a laser distance sensor (21) for measuring a distance from the digital camera (2) to the lateral dentition surface as an imaging distance, a memory that stores the partial images and the imaging distance when the partial images are taken, an image magnification converter that converts the imaging magnification of the partial images so that the imaging magnification of all of the partial images becomes equal based on the imaging distance, and an image combiner for generating a combined image by combining more than one of the partial images. The camera and the distance sensor is mounted on a movable arm (3). Sensors for detecting articulation and rotation are provided at two joints (32,34) of the movable arm.

FIG.1

**EP 1 434 028 A1**

## Description

## BACKGROUND OF THE INVENTION

### 1.FIELD OF THE INVENTION

The present invention relates to an image-reading apparatus and an image reading method. Specifically, it relates to an image-reading apparatus and an image reading method that can, after taking partial images of an object to be read, combine the partial images to obtain an entire image of the object to be read.

### 2.DESCRIPTION OF RELATED ART

X-ray pictures have been widely used as images for dental medication field. However, digital cameras and small CCD cameras have recently come to be used for explanation purpose to patients. For instance, dentition image of a patient is taken and the medical condition is analyzed and is explained to the patient based on the image.

Japanese Utility Model Publication No. H06-28859 discloses an image-taking device of the dentition image. The image-taking device has an image sensor disposed on a hand holder and optical fibers disposed around the image sensor in a ring shape.

However, according to the conventional image-taking device, since the image of the teeth to be treated is only partially taken and the entire dentition image is not obtained, so that a treating area cannot be accurately recognized and the condition of the treating area relative to a normal area cannot be recognized.

Of course, it is theoretically possible to take the partial images of the dentition and combine the partial images to construct a single combined image. However, the partially taken images have different magnification for each image and cannot be simply combined.

Alternatively, the image of the entire object may be taken as a single image by lowering the magnification. However, when the object such as the lateral dentition surface of which image to be taken is curved exhibiting front, right and left sides, the image has to be taken for each part. So, the entire dentition image cannot be obtained when the partially taken image cannot be combined.

## SUMMARY OF THE INVENTION

An object of the present invention is to provide an image-reading apparatus and an image reading method capable of taking partial images of an object to be read and obtaining an entire image of the object to be read by accurately combining the partial images.

An image-reading apparatus according to an aspect of the present invention includes: an imaging device for sequentially taking image of each part of an object as partial images; an imaging distance sensor for measuring a distance from the imaging device to the object as an imaging distance; a storage for storing the partial images and the imaging distance when the partial images are taken; an imaging magnification converter for converting the imaging magnification of the partial images to be equal for all of the partial images based on the imaging distance; and an image combiner for generating a combined image by combining more than one of the partial images.

According to the above arrangement, the entire combined image of the object to be read can be obtained by combining the partial images taken by the imaging device by the image combiner. However, when the partial images are taken at different magnifications, the partial images of different magnification cannot be simply combined.

Accordingly, the distance from the imaging device to the object is measured by the imaging distance sensor. In other words, the distance from a lens of the imaging device to the object is measured. Then, the imaging magnification can be obtained based on the imaging distance. Specifically, since the relationship between the imaging distance and an image formation distance can be specified based on the focus distance etc. determined by the lens characteristics of the imaging device, the imaging magnification can be calculated based on the ratio of the imaging distance and the image formation distance.

Since the imaging magnification can be calculated for each partial image based on the imaging distance, when the imaging magnification of the partial images are converted by the imaging magnification converter so that the magnification becomes equal for all of the partial images, the entire partial image of the object to be read can be obtained by combining the partial images.

In the above arrangement, the image-reading apparatus may preferably have a coordinates sensor that measures coordinates of the imaging device relative to a reference position; and a display for displaying the coordinates measured by the coordinates sensor.

Since the entire image is obtained by combining the partial images after taking image of each of the partial images of the object, the partial image preferably cover the entire object without gap. Further, the partial images preferably is taken so that the partial images are mutually overlapped, because, when the partial images are mutually overlapped, the combined image can be obtained by combining the partial images so that the overlapped area are superposed. In other words, the information for specifying the location of the currently taking partial image has to be provided to an operator.

Accordingly, the position of the imaging device is measured by the coordinates sensor and the measured position is displayed on the display. Then, based on the displayed coordinates position, the operator can specify the location of the partial image. Accordingly, the image of the object can be taken without gap and in a manner so that the partial images are mutually overlapped. Consequently, the entire images can be obtained by combining the partial images.

In the above aspect of the present invention, an imaging angle sensor for measuring an angle of an optical axis of the imaging device relative to the object as an imaging angle; and a display for displaying the imaging angle measured by the imaging angle sensor may preferably be provided.

Since the entire image is obtained by combining the partial images after taking image of each of the partial images of the object, the imaging angle preferably is constant for all of the partial images. When the imaging angle differs for each partial image, the partial images do not mutually coincide so that the combined image becomes unnatural and inaccurate. Preferably, the partial images may be taken while the imaging device is constantly straightly opposed to the object.

When the object is of planar configuration, it is only necessary that the imaging device be moved in parallel, so that it is less likely that the imaging angle differs for each partial image. However, when the object has curved configuration, it is difficult to adjust the angle of the imaging device and the object.

Accordingly, the imaging angle is measured by the imaging angle sensor and the measured imaging angle is displayed on the display. Then, the operator is capable of taking image of the partial images so that the imaging angle of the imaging device relative to the object always stays constant. Accordingly, the partial images can be coincided and accurate combined image can be obtained.

In the above aspect of the present invention, the image combiner may preferably calculate an overlapped area of the partial images and superpose the overlapped area to generate the combined image.

According to the above arrangement, the combined image can be obtained by combining the partial images by the image combiner so that the overlapped areas are superposed.

In the above aspect of the present invention, a movable holder having a base end fixed to a fixed portion, wherein the movable holder holds the imaging device in a manner capable of three-dimensional displacement relative to the fixed portion and vertical swing amount relative to a predetermined plane, and moves around the entirety of the object, may preferably be provided.

According to the above arrangement, the imaging device is three-dimensionally moved while being supported by the movable holder and is vertically moved. Since the imaging device is held by the movable holder, it is not necessary for an operator to take the image of the object while holding the imaging device. Further, since the imaging device is supported by the movable holder, the position of the imaging device while taking the image of the object can be fixed so that the images can be accurately obtained without being shifted.

Further, the displacement and vertical swing amount can be accurately measured based on the displacement and movement of the movable holder. Specifically, by providing a sensor and the like as a means for measuring the displacement and vertical swing amount of the movable holder, the coordinates sensor and imaging angle sensor can be constructed. In other words, the movable holder allows the movement of the imaging device around the object to be read and is fixed while taking the image of the object for measuring the imaging distance and imaging angle during the image-taking process. As a result, the partial images can be appropriately obtained and an accurate combined image can be obtained.

In the above aspect of the present invention, the object may preferably be a lateral dentition surface.

Since lateral dentition surfaces are curved, the partial images have to be separately obtained and combined in order to obtain the entire image. According to the image-reading apparatus of the present invention, the lateral dentition surface can be separately imaged for each partial image and the entire image can be obtained by combining the partial images. Consequently, the condition of the patient can be analyzed and be explained to the patient based on the combined image.

An image reading method according to another aspect of the present invention includes: an image-taking step for sequentially taking image of a part of an object to be read as partial images; an imaging distance measuring step for measuring a distance from the imaging device to the object as an imaging distance; a storing step for storing the partial images and the imaging distance when the partial images are taken; an imaging magnification converting step for converting the imaging magnification of the partial images to be equal for all of the partial images based on the imaging distance; and an image combining step for generating a combined image by combining more than one of the partial images.

According to the above arrangement, the same function and advantages as the image-reading apparatus of the present invention can be obtained. Specifically, the imaging magnification of the respective partial images is obtained based on the imaging distance and the imaging magnification of the partial images is converted during the imaging magnification converting step to be equal for all the partial images, so that the partial images can be combined during the image combining step to obtain the entire image of the object.

## BRIEF DESCRIPTION OF THE DRAWINGS

Fig. 1 is an illustration showing a dentition image-reading apparatus as an embodiment of an image-reading apparatus according to the present invention;

Fig. 2 is an illustration of an instance of taking partial images in the aforesaid embodiment;

Fig. 3 is a schematic illustration showing a distance sensor that measure a distance using a laser light source and a two-dimensional CCD sensor in the aforesaid embodiment;

Fig. 4 is a block diagram showing an arrangement of a controller of the aforesaid embodiment;

Fig. 5(A) is an illustration showing a relationship between an imaging distance and an image formation distance and 5(B) is an illustration showing an imported image and a magnification-converted image; and

Fig. 6 is an illustration showing how an entire image is obtained by combining the partial images.

## DETAILED DESCRIPTION OF PREFERRED EMBODIMENT(S)

An embodiment of the present invention will be described below with reference to the attached drawings.

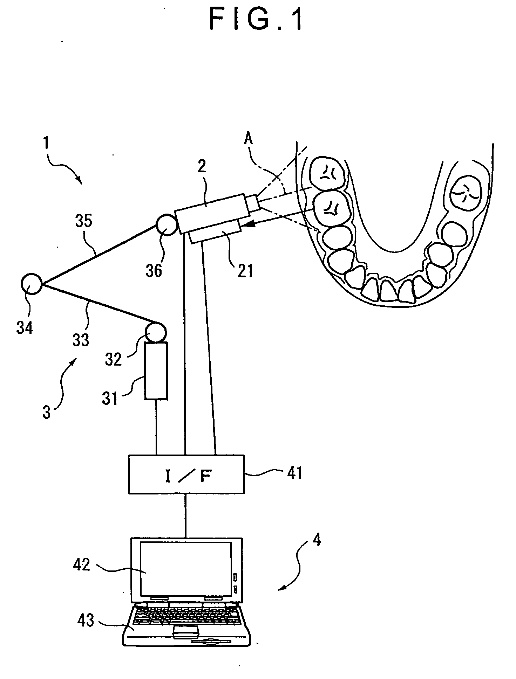

Fig. 1 shows a dentition image-reading apparatus as an embodiment of the image-reading apparatus of the present invention.

The dentition image-reading apparatus 1 has a digital camera 2 (imaging device) for taking an image of a lateral dentition surface as an object to be read, a movable arm 3 as a movable support for supporting the digital camera 2, and an image-processing computer unit 4.

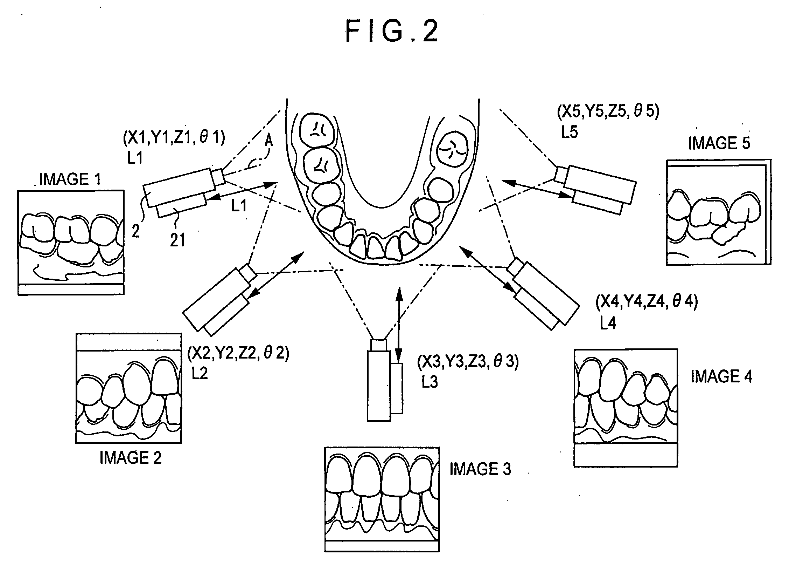

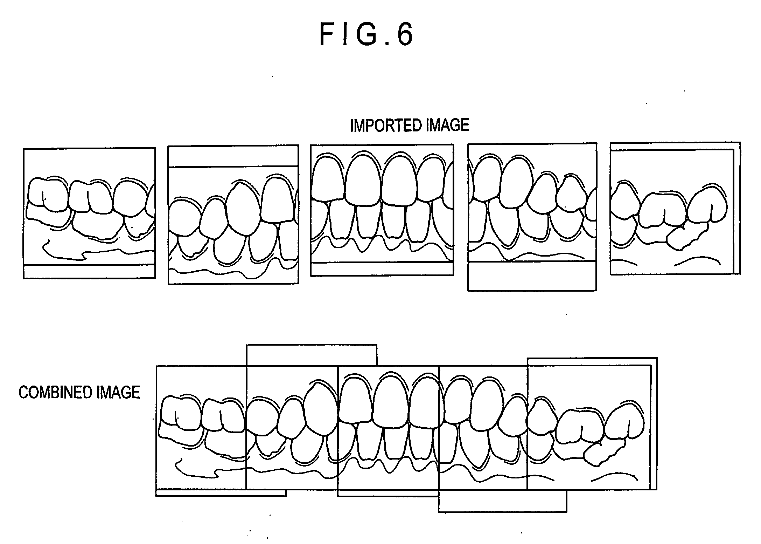

The digital camera 2 takes an image of a part of the lateral dentition surface as a partial image and the taken image is outputted to the computer unit 4 as electronic data (image-taking step). For instance, as shown in Fig. 2, the digital camera 2 takes the image of each part of the lateral dentition surface. At this time, the partial images preferably are taken so that the adjacent partial images include an overlapped area (see Fig. 2 or Fig. 6). Further, the angle (imaging angle) formed by an optical axis A of the digital camera 2 and the dentition preferably stays constant for the respective partial images. How the partial images are taken will be described below.

The digital camera 2 is provided with a distance sensor 21 (imaging distance sensor) for measuring the distance from the digital camera 2 to the dentition as an imaging distance.

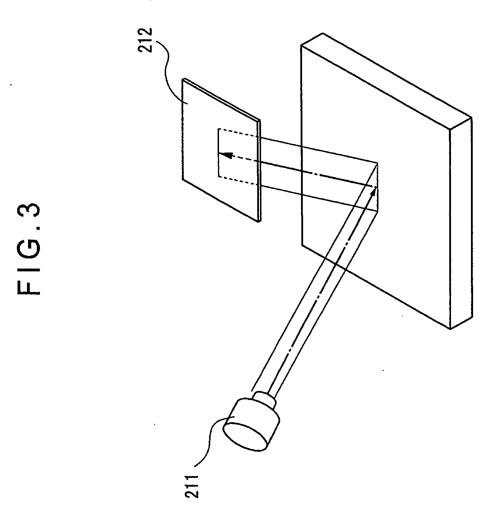

As shown in Fig. 3, the distance sensor 21 is provided with a laser light source 211 and a two-dimensional CCD position sensor 212 that receives a reflection light from the dentition. The laser light source 211 emits a line beam to the dentition. The emitted line beam is slightly angled relative to the optical axis A of the digital camera 2. The CCD position sensor 212 is a two-dimensional displacement sensor that receives the light reflected by the dentition and recognizes a light-receiving position thereon. Incidentally, when the light-receiving position is recognized, the displacement of the line beam on the CCD position sensor 212 is averaged. Then, the distance between the laser light source 211 and the dentition is calculated by a predetermined processor based on the emitting angle of the laser beam and the light-receiving position. The calculated imaging distance is outputted to the computer unit 4.

The movable arm 3 has a base end 31 fixed to a fixed portion, a first support shaft 33 fixed to the base end 31 through a universal joint 32 capable of three-dimensional displacement in a desired angle, a second support shaft 35 connected with the first support shaft 33 through a swing joint 34 capable of swinging on a plane including the first support shaft 33, and a holder 36 provided on the distal end of the second support shaft 35 for holding the digital camera 2 in a vertically swingable manner. The universal joint 32 may be a joint combining an articulating portion and a rotary portion as well as a spheroid joint.

Though the universal joint 32, the swing joint 34 and the holder 36 displace with more than a predetermined load is applied thereon, the joints and the holder keep the current shape when no load being applied.

Sensors (coordinates senor) for detecting articulation and rotation are provided respectively on the universal joint 32, the swing joint 34 and the holder 36. The coordinates position of the digital camera 2 relative to the fixed portion (reference position) is detected by the sensor.

Further, the holder 36 is provided with a sensor for measuring a vertical swing angle thereof, so that the vertical swing angle of the holder 36 is measured. By setting a normal line direction of the lateral dentition surface in advance, the imaging angle formed between the lateral dentition surface and the optical axis A of the digital camera 2 is measured based on the vertical swing angle.

The measured coordinates position and the imaging angle are outputted to the computer unit 4.

The digital camera 2 is held by the holder 36 of the movable arm 3 and is moved around the lateral dentition surface (object to be read).

The computer unit 4 is provided with a display 42 and a controller 43. An interface 41 is provided on the computer unit 4 and the image from the digital camera 2 and the data such as the coordinates, imaging distance and imaging angle are inputted to the computer unit 4 through the interface 41.

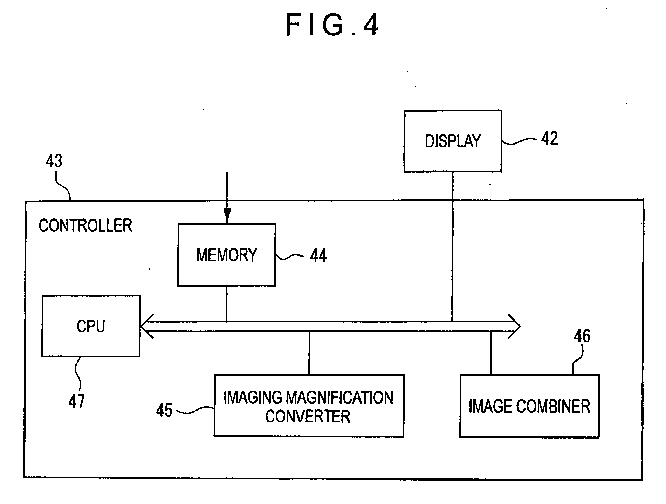

Fig. 4 is a block diagram showing a function of the controller 43. The controller 43 is provided with a memory 44 (storage), an imaging magnification converter 45, an image combiner 46, and a central processing unit (CPU) 47.

The memory 44 stores a set of the partial images taken by the digital camera 2 and the imaging distance when the partial images are taken.

The imaging magnification converter 45 converts all of the partial images with an equal imaging magnification (imaging magnification converting step). The imaging magnification conversion will be described below.

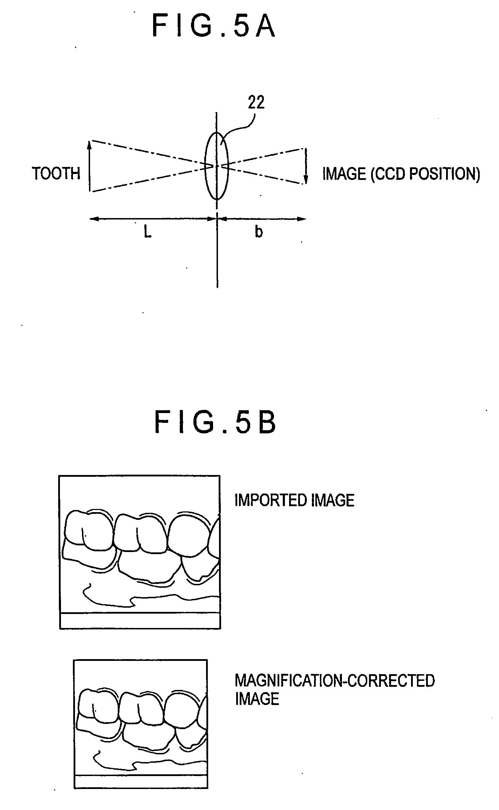

As shown in Fig. 5, the distance from the lens 22 of the digital camera 2 to the dentition (imaging distance) is represented by L and the distance from the lens 22 to the formed image (image formation distance) is represented by b (see Fig 5(A)). Then, the imaging magnification m is represented as m = b/L. On the other hand, when a focus distance of the lens 22 is represented as f, the equation of (1/L) - (1/b) = 1/f is generally established.

Accordingly, the imaging magnification m can be represented as:

$$m = b/L = f/(L+f)$$

In other words, the imaging magnification can be determined by the imaging distance L and the focus distance f. Accordingly, the imaging magnification m is calculated based on the imaging distance L of the imaged partial images. Then, full-size images can be obtained by multiplying the partial images by (1/m). In other words:

$$(\text{full-size image}) = (\text{partial image}) \times 1 / m$$

The imaging magnification converter 45 fetches the partial image stored in the memory 44 and the imaging distance for the partial images. The imaging magnification is calculated based on the imaging distance and the full-size image that is formed by converting the partial image in a full-size scale is generated based on the imaging magnification (see Fig. 5(B)).

The image combiner 46 creates a combined image of the entire lateral dentition surface by combining the partial images converted into full-size scale by the imaging magnification converter 45 (see Fig. 6).

The image combiner 46 compares the partial images converted into the full-size scale and determines the overlapped area (overlapped area extracting step). Then, the combined image is generated by combining the partial images by superposing the overlapped area (image combining step).

The display 42 displays various data and images. The data displayed on the display 42 includes coordinates, imaging angle and imaging distance of the digital camera 2. Further, the display 42 displays the respective partial images as well as the combined image of the entire lateral dentition surface.

The display 42 displays the coordinates poison of the digital camera 2 in a realtime manner. The operator who takes the images estimates the location of the partial images taken by the digital camera 2 based on the coordinates position displayed on the display 42 and takes the images of the respective partial images so that the adjoining partial images are mutually overlapped.

Alternatively, the partial images are taken while the precedingly taken partial image is displayed on the display 42, which is compared with the newly taken partial image to judge whether the preceding partial image and the new partial image are overlapped or not.

The imaging angle is displayed on the display 42 in a realtime manner. While checking the imaging angle displayed on the display 42, the operator adjusts the vertical swing angle etc. of the digital camera 2 so that the image angle is kept constant for all of the partial images.

The specific use and function of the dentition image-reading apparatus 1 will be described below.

Initially, a subject person whose dentition image is to be taken is sat in front of the digital camera 2. At this time, the normal direction of the lateral dentition surface (i.e. the object to be read) is preferably directed in horizontal direction. In other words, when the face of the subject person is straightly faced forward and the optical axis A of the digital camera 2 is horizontally set, the digital camera 2 preferably straightly opposes perpendicular to the lateral dentition surface.

In this state, the digital camera 2 is attached to the holder 36 of the movable arm 3. Subsequently, the digital camera 2 is brought close to the lateral dentition surface and the partial image of the lateral dentition surface is taken at a distance of from a couple of centimeters to a couple of ten centimeters from the lateral dentition surface. At this time, the imaging angle displayed on the display 42 is preferably around zero degree, where the partial images are taken while the digital camera 2 straightly opposes to the lateral dentition surface.

The parts of the lateral dentition surface are sequentially taken by shifting the image-taking areas so that mutually adjoining partial images have the overlapped area.

The taken partial images are stored in the memory 44 together with the imaging distance thereof.

The magnification of the partial image stored in the memory 44 is converted by the imaging magnification converter 45 into, for instance, a full-size scale. After the magnification conversion, the partial images are combined by the image combiner 46 to generate the combined image.

According to the above dentition image-reading apparatus 1, following advantages can be obtained.

(1) Since the imaging distance sensor 21 is provided, the distance from the digital camera 2 to the dentition can be measured. Accordingly, the imaging magnification of the partial image can be calculated based on the imaging distance. Since the imaging magnification can be calculated, the entire image of the dentition can be obtained by combining the partial images after equalizing the magnification of the partial images by the imaging magnification converter 45.

(2) A sensor is provided on the movable arm 3, and the vertical swing angle as the coordinates of the digital camera 2 or the imaging angle is measured and displayed on the display 42. The operator can determine the location of the partial images based on the displayed coordinates. Accordingly, the image of the dentition can be taken leaving no space therebetween and securing the overlapped area of the partial images. As a result, the partial images can be combined and the entire image can be obtained.

Further, since the imaging angle (vertical swing angle) is displayed, the direction of the digital camera 2 can be adjusted so that the imaging angle becomes constant.

(3) Since the digital camera 2 is held by the movable arm 3, it is not necessary for the operator to hold the digital camera 2. Accordingly, the digital camera 2 is not shifted during image-taking process, and a clear image can be obtained.

(4) Since the entire image can be obtained by combining the partial images taken for each part, the entire image of a curved object such as a lateral dentition surface can be obtained by combining the partial images taken for each part.

Incidentally, the scope of the image-reading apparatus and the image reading method of the present invention is not restricted to the above-described embodiment, but includes various modifications as long as an object of the present invention can be achieved.

The imaging device may not be the digital camera 2, but other imaging devices may be used. For instance, a film-processing camera may be used, however, a digital imaging device capable of generating a digital image may preferably used in that the image processing such as image composition can be electronically conducted.

The imaging distance sensor may not be the distance sensor 21 of the above embodiment, but may be various non-contact distance sensors. For instance, the distance may be obtained by emitting a laser beam and measuring the round-trip time for the laser beam to collide with an object and to be returned. Incidentally, the measurement accuracy of the distance sensor may preferably be as high as possible, however, the measurement accuracy may be about the focus depth of the imaging device or more.

Though the imaging angle sensor measures the vertical swing angle of the digital camera 2 as the imaging angle, the imaging angle sensor may measure a horizontal swing angle of the digital camera 2 as well.

The movable arm 3 may be arranged in a manner different from the above embodiment as long as the digital camera 2 can be movably held.

Though the digital camera 2 may be moved while being held by the movable arm 3 by an operator actually holding the movable arm 3 or the digital camera 2, a motor as a drive device may be installed in the universal joint 32, the swing joint 34 and the holder 36 and the motor may be driven in accordance with the coordinates position and imaging angle inputted in the computer unit 4 to automatically adjust the position and angle of the digital camera 2. Further, the coordinates and the imaging angle of the digital camera may be set in advance. According to the above arrangement, since it is not necessary for the operator to check and adjust the coordinates position and the imaging angle each time, the image-taking process can be facilitated. Further, by setting the coordinates position etc. so that the partial images are properly overlapped, the combined images can be securely obtained.

Though the imaging magnification converter converts the partial image into a full-size scale in the above embodiment, the magnification conversion rate may be set in a different manner in accordance with the specific usage.

## Claims

1. An image-reading apparatus, comprising:

   an imaging device for sequentially taking image of each part of an object as partial images;
   an imaging distance sensor for measuring a distance from the imaging device to the object as an imaging distance;
   a storage for storing the partial images and the imaging distance when the partial images are taken;
   an imaging magnification converter for converting the imaging magnification of the partial images to be equal for all of the partial images based on the imaging distance; and
   an image combiner for generating a combined image by combining more than one of the partial images.

2. The image-reading apparatus according to claim 1, further comprising:

   a coordinates sensor that measures coordinates of the imaging device relative to a reference position; and
   a display for displaying the coordinates measured by the coordinates sensor.

3. The image-reading apparatus according to claim 1 or 2, further comprising:

   an imaging angle sensor for measuring an angle of an optical axis of the imaging device relative to the object as an imaging angle; and

a display for displaying the imaging angle measured by the imaging angle sensor.

4. The image-reading apparatus according to any one of claims 1 to 3, wherein the image combiner calculates an overlapped area of the partial images and superposes the overlapped area to generate the combined image.

5. The image-reading apparatus according to any one of claims 1 to 4, further comprising:

a movable holder having a base end fixed to a fixed portion, wherein the movable holder holds the imaging device in a manner capable of three-dimensional displacement relative to the fixed portion and vertical swing amount relative to a predetermined plane, and moves around the entirety of the object.

6. The image-reading apparatus according to any one of claims I to 5, wherein the object is a lateral dentition surface.

7. An image reading method, comprising:

an image-taking step for sequentially taking image of a part of an object to be read as partial images;
an imaging distance measuring step for measuring a distance from the imaging device to the object as an imaging distance;
a storing step for storing the partial images and the imaging distance when the partial images are taken;
an imaging magnification converting step for converting the imaging magnification of the partial images to be equal for all of the partial images based on the imaging distance; and
an image combining step for generating a combined image by combining more than one of the partial images.

# FIG.1

FIG.2

FIG. 3

# FIG. 4

CONTROLLER 43

DISPLAY 42

MEMORY 44

CPU 47

IMAGING MAGNIFICATION CONVERTER 45

IMAGE COMBINER 46

EP 1 434 028 A1

# F I G . 5 A

TOOTH

IMAGE (CCD POSITION)

22

L

b

# F I G . 5 B

IMPORTED IMAGE

MAGNIFICATION-CORRECTED IMAGE

FIG.6

IMPORTED IMAGE

COMBINED IMAGE

EP 1 434 028 A1

**European Patent Office**

**EUROPEAN SEARCH REPORT**

Application Number

EP 03 02 9753

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 462 905 A (SONY CORP) 27 December 1991 (1991-12-27) * column 4, line 6 - column 7, line 12; figures 1-3 * --- | 1-7 | G01B11/00 G06T7/00 |
| X | US 6 304 284 B1 (DUNTON RANDY R  ET AL) 16 October 2001 (2001-10-16) * column 2, line 50 - column 7, line 23; figures 1-5 * --- | 1-7 | |
| A | EP 0 782 100 A (CANON KK) 2 July 1997 (1997-07-02) * page 3, line 27 - page 8, line 40; figures 1-11 * ----- | 1-7 | |

TECHNICAL FIELDS
SEARCHED        (Int.Cl.7)

G01B
G06T

The present search report has been drawn up for all claims

| Place of search | Date of completion of the search | Examiner |
|---|---|---|
| MUNICH | 20 April 2004 | Beyfuß, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 1 434 028 A1**

**ANNEX TO THE EUROPEAN SEARCH REPORT
ON EUROPEAN PATENT APPLICATION NO.**                    EP 03 02 9753

This annex lists the patent family members relating to the patent documents cited in the above-mentioned European search report.
The members are as contained in the European Patent Office EDP file on
The European Patent Office is in no way liable for these particulars which are merely given for the purpose of information.

20-04-2004

| Patent document cited in search report | | Publication date | Patent family member(s) | | Publication date |
|---|---|---|---|---|---|
| EP 0462905 | A | 27-12-1991 | JP | 3021556 B2 | 15-03-2000 |
| | | | JP | 4052635 A | 20-02-1992 |
| | | | CA | 2044997 A1 | 21-12-1991 |
| | | | DE | 69124146 D1 | 27-02-1997 |
| | | | DE | 69124146 T2 | 07-05-1997 |
| | | | EP | 0462905 A2 | 27-12-1991 |
| | | | KR | 184245 B1 | 15-05-1999 |
| | | | US | 5262867 A | 16-11-1993 |
| US 6304284 | B1 | 16-10-2001 | AU | 3189999 A | 18-10-1999 |
| | | | DE | 19983065 T0 | 12-04-2001 |
| | | | GB | 2352580 A ,B | 31-01-2001 |
| | | | JP | 2003524306 T | 12-08-2003 |
| | | | TW | 401687 B | 11-08-2000 |
| | | | WO | 9951027 A1 | 07-10-1999 |
| EP 0782100 | A | 02-07-1997 | JP | 9187038 A | 15-07-1997 |
| | | | DE | 69624550 D1 | 05-12-2002 |
| | | | DE | 69624550 T2 | 10-04-2003 |
| | | | EP | 0782100 A2 | 02-07-1997 |
| | | | US | 6031941 A | 29-02-2000 |

EPO FORM P0459

For more details about this annex : see Official Journal of the European Patent Office, No. 12/82

15